# EUROPÄISCHE PATENTANMELDUNG

(11) **EP 1 186 332 A1**
(43) Veröffentlichungstag der Anmeldung: **13.03.2002**
(21) Anmeldenummer: 01109101.4
(22) Anmeldetag: 12.04.2001
(51) Int. Cl.: B01D 29/15, B01D 29/21, B01D 29/66

(54) **Rohrförmiges Rückspülbares Filterelement**

(30) Priorität: 08.09.2000 DE 10044579
(71) Anmelder: Graver Technologies Europe GmbH, 73730 Esslingen-Sirnau (DE)
(72) Erfinder: Beck, Walter O., 73760 Ostfildern (DE)
(74) Vertreter: Kratzsch, Volkhard, Dipl.-Ing.

(57) **Zusammenfassung**

Die Erfindung betrifft ein rohrförmiges Filterelement (10), das über seine Rohrlänge reichendes Filtermaterial (11) und im Inneren einen Hohlraum (13) aufweist und im Filterbetrieb außen mit zu filterndem Medium beaufschlagbar ist, welches das Filtermaterial (11) von außen nach innen zum Hohlraum (13) hin durchsetzt. Im Hohlraum (13) ist eine Rückspülhilfe (14) angeordnet, die ein koaxiales Innenrohr (15) aufweist, das zumindest an einigen Stellen mit Abstand vom Filtermaterial (11) unter Bildung mindestens eines Zwischenraumes (16) dazwischen angeordnet ist. Das Innenrohr (15) enthält zumindest etwa auf seinem unteren Längenbereich in der Rohrwandung (19) Durchbrüche (20), wodurch eine über die ganze Rohrlänge gleichmäßige Rückspülung ermöglicht ist. Zum Rückspülen des Filtermaterial (11) wird das Rückspülmedium einerseits in das Innere (21) des Innenrohres (15) und durch dessen Durchbrüche (20) hindurch und andererseits auch in den mindestens einen Zwischenraum (16) und von dort von innen nach außen durch das Filtermaterial (11) geleitet.

## Beschreibung

Die Erfindung bezieht sich auf ein rohrförmiges Filterelement mit den Merkmalen im Oberbegriff des Anspruchs 1.

Bei einem bekannten rohrförmigen Filterelement dieser Art (DE 42 42 991) dient das Innenrohr zum Ausfüllen des Hohlraumes im Filtermaterial in Form eines rohrförmigen Zylinderkörpers, wobei das Innenrohr am oberen Ende geschlossen ist, während der zwischen dem Innenrohr und dem Filtermaterial gebildete ringförmige Zwischenraum am oberen Ende des Filterelements offen ist. Ein solches rohrförmiges Filterelement wird hierbei mit Druckluft in der Weise rückgespült und gereinigt, dass in den oben offenen ringförmigen Zwischenraum zwischen dem Innenrohr und dem Filtermaterial Druckluft eingeleitet wird, die das Filtermaterial von innen nach außen passiert und auf diese Weise vom aufgenommen Schmutz befreien soll.

Es hat sich gezeigt, dass je nach Material, aus dem der zylindrische Filterkörper besteht, eine mehr oder weniger untaugliche Rückspülung dieses auf diese Weise geschieht, weil beim Rückspülen, sei dies nun nur durch Luft oder durch ein aus Wasser und/oder Luft bestehendes Rückspülmedium, im wesentlichen nur der obere Teil des Filterelements schnell gesäubert und rückgespült wird. Mit zunehmender Reinigung dieses oberen Bereichs nimmt dort der Widerstand ab, so dass die noch zur Verfügung stehende Menge des Rückspülmediums in diesem oberen Bereich dann das Filtermaterial passieren kann, ohne dass der darunter befindliche mittlere oder untere Teil des Filtermaterials damit beaufschlagt, rückgespült und gereinigt wird. Je nach verwendetem Filtermaterial wirkt sich dieser Nachteil mehr oder weniger stark aus. Vor allem bei einem Filtermaterial, das aus gefaltetem, insbesondere plissiertem, oder gewickeltem Material besteht, ist das Rückspülergebnis besonders ungünstig, weil gerade diese Materialien sehr große Oberflächen und niedrige Widerstände aufweisen, so dass das Filterelement auf dem oberen Längenbereich relativ schnell rückgespült und gereinigt wird mit der Folge der Widerstandsreduzierung und dem Nachteil, dass dann das Rückspülmedium den darunter befindlichen Längenbereich des Filterelements nicht mehr rückspült und reinigt.

Der Erfindung liegt die Aufgabe zugrunde, ein rohrförmiges Filterelement der eingangs genannten Art so auszubilden, dass eine im wesentlichen über die gesamte Rohrlänge gleichmäßige Rückspülung erreichbar ist.

Die Aufgabe ist bei einem rohrförmigen Filterelement der eingangs genannten Art gemäß der Erfindung durch die Merkmale im Anspruch 1 gelöst. Weitere wesentliche Erfindungsmerkmale und vorteilhafte Ausgestaltungen hierzu ergeben sich aus den Unteransprüchen.

Durch die erfindungsgemäße Gestaltung kann das Filterelement auf seiner gesamten Länge rückgespült werden und der aufgenommene Schmutz durch Rückspülen entfernt werden. Es wird eine im wesentlichen gleichmäßige Rückspülung über die gesamte Rohrlänge erreicht, und dies auch bei einem solchen Filtermaterial, das gefaltetes, insbesondere plissiertes, Material, insbesondere Vlies, als Filtermedium aufweist. Beim Rückspülen mittels des aus Wasser und/oder Luft bestehenden Rückspülmediums wird dieses einerseits in das Innere des Innenrohres eingeleitet, wobei das Rückspülmedium den Längenbereich des Innenrohres, dessen Wandung durchgehend ist und keine Durchbrüche aufweist, nicht durchdringen kann. Erst dann, wenn das in das Innere des Innenrohres gedrückte Rückspülmedium den Längenbereich des Innenrohres erreicht, der in der Wandung mit Durchbrüchen versehen ist, gelangt das Rückspülmedium durch die Durchbrüche hindurch in den Zwischenraum und von diesem von innen nach außen durch das Filtermaterial, das damit rückgespült und gereinigt wird. Außerdem wird Rückspülmedium in den mindestens einen Zwischenraum, der zwischen dem Innenrohr und dem Filtermaterial gebildet ist, hineingedrückt, wobei durch diesen Anteil des Rückspülmediums der obere Längenbereich des Filtermaterials rückgespült und gereinigt wird, da in diesem Bereich das Rückspülmedium vom Zwischenraum her von innen nach außen durch das Filtermaterial hindurch geleitet wird. Selbst bei solchen rohrförmigen Filterelementen, die eine große Länge z. B. von 2 m oder mehr aufweisen, ist somit aufgrund der Erfindung über die ganze Rohrlänge eine im wesentlichen gleichmäßige Rückspülung und Reinigung des Filtermaterials möglich. Der Druck des Rückspülmediums verteilt sich auf die gesamte Länge von oben nach unten einigermaßen gleichmäßig. Aufgrund erreichbarer Rückspülung und Reinigung über die gesamte Rohrlänge ist das Filterelement nach dem Rückspülen und im Filterbetrieb wieder in der Lage, auf der gesamten Länge eine Filterwirkung auszuüben. Somit wird die Lebensdauer des Filtermaterials durch die Erfindung wesentlich gesteigert. Bei allem ist der Aufwand zur Verwirklichung des erfindungsgemäßen Filterelements gering. Auch bereits in Betrieb befindliche Filterelemente können mit nur geringem Aufwand im Sinne der Erfindung nachgerüstet werden.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen Schnitt der wesentlichen Teile eines Filterelements gemäß einem ersten Ausführungsbeispiel,
- Fig. 2: einen schematischen Schnitt entlang der Linie II-II in Fig. 1,
- Fig. 3 und 4: jeweils einen Schnitt entsprechend demjenigen in Fig. 2 eines zweiten bzw. dritten Ausführungsbeispiels,
- Fig. 5: einen schematischen Schnitt etwa entsprechend demjenigen in Fig. 1 eines Filterelements gemäß einem vierten Ausführungsbeispiels,
- Fig. 6: einen Schnitt entlang der Linie VI-VI in Fig. 5,
- Fig. 7: einen schematischen Schnitt etwa entsprechend demjenigen in Fig. 1 bzw. Fig. 5 eines Filterelements gemäß einem fünften Ausführungsbeispiel,
- Fig. 8: einen Schnitt entlang der Linie VIII-VIII in Fig. 7.

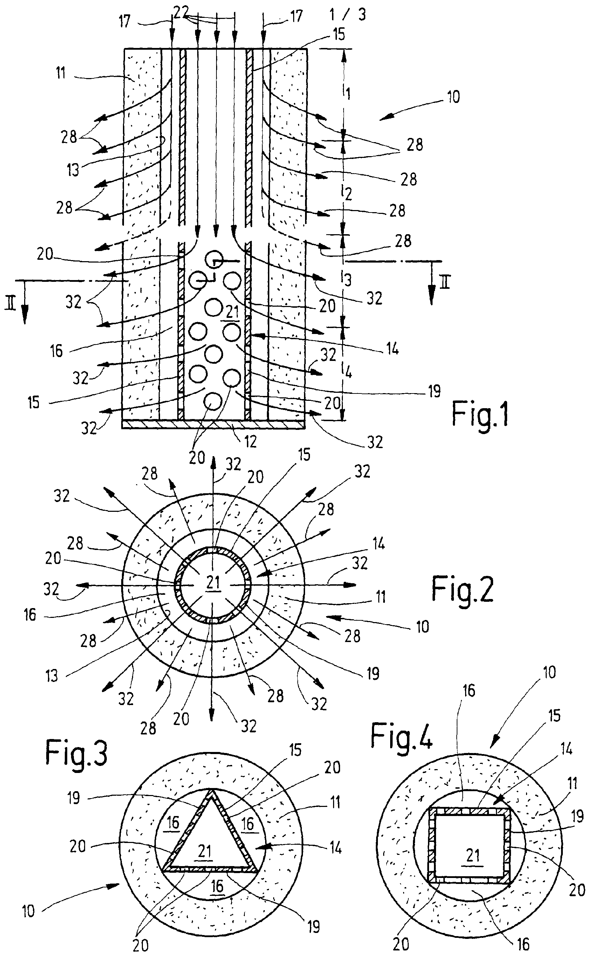

In Fig.1 und 2 ist ein erstes Ausführungsbeispiel eines rohrförmigen Filterelements 10 gezeigt, das ein Filtermaterial 11 in Form eines rohrförmigen Zylinderkörpers aufweist, welches sich über die gesamte Länge des Filterelements 10 erstreckt. Das Filterelement 10 weist eine beträchtliche Länge auf, die z. B. 2 m betragen kann. Die gesamte Rohrlänge ist in Fig. 1 zur Verdeutlichung in vier einzelne etwa gleich große Längenabschnitte I 1, I 2, I 3 und I 4 unterteilt. Das Filterelement 10 ist am in Fig. 1 unteren Ende mittels eines Abschlusses 12 verschlossen. Im Inneren des rohrförmigen Zylinderkörpers, der das Filtermaterial 11 bildet, ist ein Hohlraum 13 vorhanden. Im Filterbetrieb wird das Filterelement 10 außen auf der Außenseite des Filtermaterials 11 mit einem zu filternden Medium, z. B.einer Flüssigkeit, beaufschlagt, wobei die Flüssigkeit das Filtermaterial 11 von außen nach innen zum Hohlraum 13 hin durchsetzt und enthaltene Partikel, insbesondere Schmutz, zurückgehalten werden, die sich am bzw. im Filtermaterial 11 ansammeln. In bestimmten Zeitabständen werden derartige Filterelemente 10, insbesondere das Filtermaterial 11, dadurch gereinigt und regeneriert, dass eine Rückspülung mit einem Rückspülmedium, insbesondere Wasser und/oder Luft oder Gas, gegensinnig zum Filterbetrieb von innen nach außen durch das Filtermaterial 11 erfolgt.

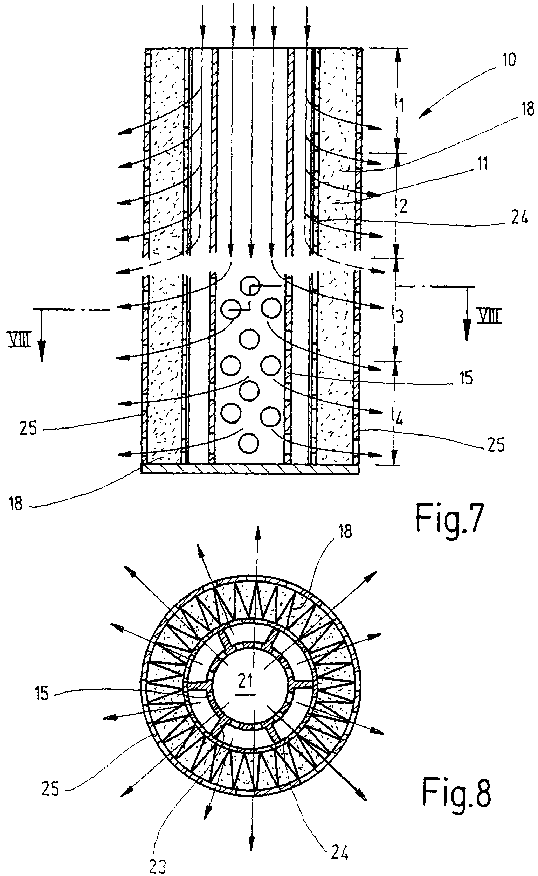

Im Hohlraum 13 ist für die Rückspülung eine allgemein mit 14 bezeichnete Rückspülhilfe angeordnet. Die Rückspülhilfe 14 weist ein koaxiales Innenrohr 15 auf, das über die gesamte Länge des Filterlements 10 reicht und wie dieses am oberen Ende offen und am unteren Ende mittels des Abschlusses 12 verschlossen ist. Das Innenrohr 15 ist so bemessen und gestaltet, dass dieses zumindest an einigen Stellen mit Abstand vom Filtermaterial 11 verläuft und zwischen der Innenseite des Filtermaterials 11 und der Außenseite des Innenrohrs 15 mindestens einen Zwischenraum 16 bildet. Es ist bekannt, zum Rückspülen in den zwischen dem Innenrohr 15 und dem Filtermaterial 11 gebildeten mindestens einen Zwischenraum 16 vom in Fig. 1 oben befindlichen offenen Ende her in Pfeilrichtung 17 ein Spülmedium zum Rückspülen einzuleiten. Dabei läßt sich feststellen, dass sich das Filterelement 10 nur im oberen Bereich rückspülen lässt, was von Besonderheiten des Filtermaterials abhängig ist. Bei einem Filtermaterial 11, welches sehr große Oberflächen und niedrige Widerstände aufweist, wie z. B. ein in Fig. 7 und 8 gezeigtes, gefaltetes, insbesondere plissiertes, Material, insbesondere Vlies 18, sind diese Nachteile besonders groß, während solche Filtermaterialien 11, die aus gewickeltem Material bestehen, z. B. aus gewickeltem Garn, dies nicht so deutlich zeigen, da diese einen höheren Anfangswiderstand aufweisen als etwa ein gefaltetes, insbesondere plissiertes, Vlies 18. Aber auch bei einem derartigen Filtermaterial 11 ist beim Rückspülen durch das Medium, das in den Zwischenraum 16 eingeleitet wird, keinesfalls eine gleichmäßige Rückspülung erreichbar, da auch dann hauptsächlich nur der obere Längenbereich des Filterelements 10 schnell rückgespült und gesäubert wird. Durch Absinken des Widerstandes in diesem oberen Längenbereich des Filtermaterials 11, der rückgespült wurde, wird die noch zur Verfügung stehende Rückspülmenge dort aufgrund des reduzierten Widerstandes das Filtermaterial 11 passieren und nicht in den unteren Bereich des Zwischenraumes 16 und dort von innen nach außen durch das Filtermaterial 11 gelangen, so dass etwa ab der Längenmitte, beginnend etwa mit I 3, das Filtermaterial 11 nur unzulänglich oder überhaupt nicht rückgespült und gereinigt wird. Dieser restliche Teil des Filtermaterials 11 bleibt somit mit Schmutz behaftet. Nach Beendigung einer Rückspülphase dieser Art ist dann beim Filterbetrieb nur der obere gereinigte Längenbereich des Filtermaterials 11 wirksam, um dort Schmutz aufzunehmen. Das Filterelement 10 ist somit dann hinsichtlich des Filtervermögens erheblich reduziert, unter Umständen nur noch auf eine Filterleistung von etwa 30 %.

Dem wird durch die erfindungsgemäße Gestaltung des Filterelements 10, insbesondere der Rückspülhilfe 14, wirksam begegnet. Das Innenrohr 15 enthält etwa auf seinem unteren Längenbereich in der Wandung 19 Durchbrüche 20, z. B. in Form von Öffnungen, Bohrungen od. dgl.. Dieser untere, mit den Durchbrüchen 20 versehene Längenbereich des Innenrohres 15 kann z. B. etwa halb so lang wie die Gesamtlänge des Innenrohres 15 bemessen sein. Z. B. hat dieser mit Durchbrüchen 20 versehene Längenbereich etwa die Länge I 3 + I 4, wobei die Durchbrüche 20 in der Wandung 19 etwa am Ende der halben Länge des Innenrohres 15, gemessen vom in Fig. 1 oberen Ende, beginnen. Wichtig ist, dass der darüber befindliche Teil des Innenrohres 15 in der Wandung 19 keinerlei Durchbrüche enthält, sondern die Wandung 19 völlig undurchlässig ist. Die Anzahl, Verteilung und der Durchlassquerschnitt der Durchbrüche 20 sind von Fall zu Fall unterschiedlich und daran angepasst, aus welchem Filtermedium das Filtermaterial 11 besteht. Zum Rückspülen des Filterelements 10, insbesondere des Filtermaterials 11, gemäß der Erfindung wird das Rückspülmedium, insbesondere Wasser und/oder Luft, einerseits in Pfeilrichtung 17 in den mindestens einen Zwischenraum 16 eingeleitet. Das Rückspülmedium nimmt dort den Verlauf, der durch die Pfeile 28 verdeutlicht ist, wobei das Rückspülmedium nur auf dem oberen Längenbereich das Filtermaterial 11 von innen nach außen passiert und dort durch Rückspülung reinigt. Im unteren Endbereich des Längenabschnitts I 2 ist durch gestrichelten Pfeil verdeutlicht, dass dort die Rückspülung mittels des in den Zwischenraum 16 eingeleiteten Mediums nur noch unzulänglich ist oder gar nicht mehr geschieht. Ferner wird beim Rückspülen das Rückspülmedium in Pfeilrichtung 22 am oben offenen Ende in das Innere 21 des Innenrohres 15 eingeleitet. Da der obere Längenbereich des Innenrohres 15 keine Durchbrüche in der Wandung 19 hat, gelangt das Rückspülmedium im Inneren 21 weiter nach unten, wo es im Bereich der vorhandenen Durchbrüche 20 in Pfeilrichtung 32 durch die Durchbrüche 20 hindurch, durch den Zwischenraum 16 und durch das Filtermaterial 11 unter Rückspülung dieses nach außen gelangt. Durch einen entsprechenden Widerstandsausgleich ist somit gewährleistet, dass das Rückspülmedium, welches entsprechend den Pfeilen 17 von oben her in den Zwischenraum 16 eingeleitet wird, den oberen Längenabschnitt des Filtermaterials 11 rückspült, während das Rückspülmedium, welches in Richtung der Pfeile 22 in das Innere 21 des Innenrohres 15 gedrückt wird, über die Durchbrüche 20 den unteren Längenbereich des Filtermaterials 11 von innen her rückspült. Das Filterelement 10, insbesondere das Filtermaterial 11, wird somit auf der gesamten Länge rückgespült und gereinigt, wobei sich eine gleichmäßige Rückspülung auf dieser gesamten Länge ergibt. Dies führt dazu, dass nach der jeweiligen Rückspülung das Filtermaterial 11 auf der gesamten Länge gereinigt ist und im erneuten Filterbetrieb ein volles Filtervermögen aufweist.

Das Innenrohr 15 ist hinsichtlich seiner Querschnittsform und der Rohrabmessungen derart gestaltet, dass innerhalb des Innenrohres 15 dessen Inneres 21 und außenseitig des Innenrohres 15 zwischen letzterem und dem Filtermaterial 11 beim ersten Ausführungsbeispiel ein solcher Zwischenraum 16 gebildet ist, der ringförmig ist. Das Innenrohr 15 ist beim ersten Ausführungsbeispiel im Querschnitt kreisförmig, woraus ein ringförmiger Zwischenraum 16 resultiert. Das Filtermaterial 11 weist die Form eines rohrförmigen Zylinderkörpers auf und kann aus verschiedenartigen Filtermedien gebildet bzw. aufgebaut sein, z. B. aus gewickeltem Garn.

Bei den in Fig. 3 bis 8 gezeigten weiteren Ausführungsbeispielen sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles Bezug genommen ist.

Beim zweiten Ausführungsbeispiel in Fig. 3 ist das Innenrohr 15 hinsichtlich der Querschnittsform und der Querschnittsabmessungen so gestaltet, dass zwischen dem Innenrohr 15 einerseits und der Innenseite des Filtermaterials 11 andererseits mehrere Zwischenräume 16 gebildet sind, bei diesem Ausführungsbeispiel gemäß Fig. 3 drei derartige Zwischenräume 16. Das Innenrohr 15 gemäß Fig. 3 hat einen Vieleckquerschnitt, hierbei insbesondere einen Dreieckquerschnitt, und besteht somit aus einem Dreieckrohr. Dieses ist hinsichtlich der Querabmessungen so bemessen, dass das Innenrohr 15 an der Innenseite des Filtermaterials 11 im wesentlichen anliegt, entlang der gesamten Länge des Filterelements 10, wobei von den drei Wänden des dreieckförmigen Innenrohres 15 und der Innenseite des Filtermaterials 11 drei dementsprechend geformte Zwischenräume 16 begrenzt sind. Diese drei Zwischenräume 16 folgen in etwa gleichen Umfangswinkelabständen aufeinander. Sie weisen jeweils etwa gleich große Volumina auf. Bei einem abgewandelten Ausführungsbeispiel hat das Innenrohr statt dessen Sternform.

Für das zweite Ausführungsbeispiel gemäß Fig. 3 gilt ebenso wie für das erste Ausführungsbeispiel in Fig. 1 und 2 der Grundsatz, dass das Volumen des mindestens einen Zwischenraumes 16, beim Beispiel gemäß Fig. 3 die Volumensumme der Zwischenräume 16, kleiner bemessen ist als das Volumen im Inneren 21 des Innenrohres 15.

Beim dritten Ausführungsbeispiel in Fig. 4 ist das Innenrohr 15 nach dem gleichen Grundsatz wie beim zweiten Ausführungsbeispiel in Fig. 3 gestaltet. Es weist einen Vieleckquerschnitt auf, und zwar hier einen Viereckquerschnitt, wodurch sich insgesamt vier Wandungen 19 ergeben. Auch hier folgen die Zwischenräume 16 in etwa gleichen Umfangswinkelabständen aufeinander, wobei sie jeweils etwa gleich große Volumina aufweisen. Die Volumensumme aller vier Zwischenräume 16 ist kleiner als das Volumen im Inneren 21 des im Querschnitt viereckigen Innenrohres 15.

Den beiden Ausführungsbeispielen in Fig. 3 und 4 ist gemeinsam, dass das jeweils vieleckige Innenrohr zwei Funktionen in einem erfüllt, nämlich zum einen mit seinem Inneren 21 den entsprechenden Innenraum bildet, der im unteren Längenbereich über die Durchbrüche 20 in den Wandungen 19 Verbindung zu den Zwischenräumen 16 hat, und zum anderen mit den Wandungen 19 zugleich Trennwände liefert, die längs einer jeweiligen Sekante im Inneren des Filtermaterials 11 verlaufen und dadurch den ringförmigen Zwischenraum in einzelne Kammern 16 unterteilen.

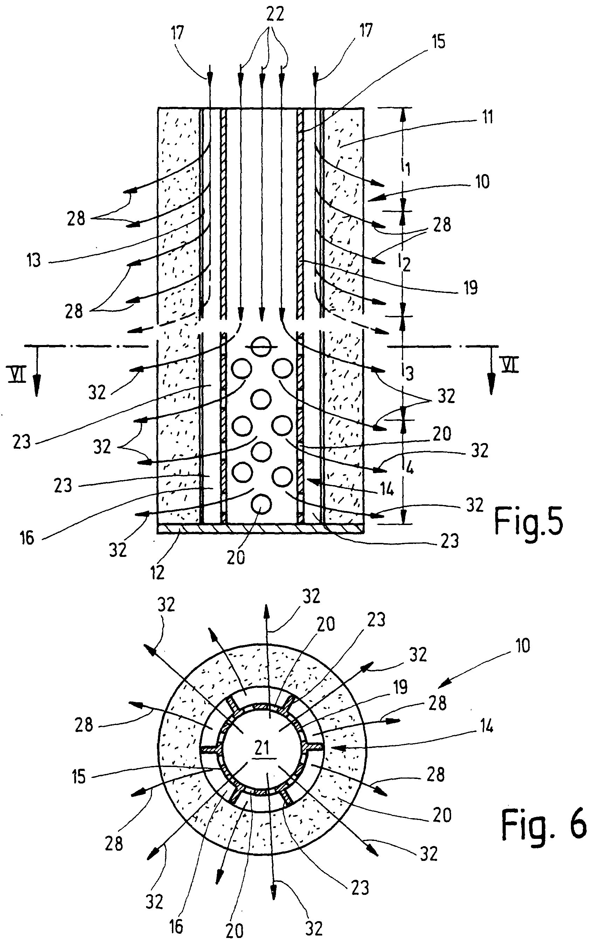

Das vierte Ausführungsbeispiel in Fig. 5 und 6 unterscheidet sich vom ersten Ausführungsbeispiel dadurch, dass der beim ersten Ausführungsbeispiel ringförmige Zwischenraum 16 mittels radialer Trennwände 23 in einzelne Kammern unterteilt ist, die in etwa gleichen Umfangswinkelabständen aufeinanderfolgen und etwa gleich große Volumina aufweisen. Die Volumensumme aller Kammern 16 ist kleiner bemessen als das Volumen im Inneren 21 des Innenrohres 15. Wie ersichtlich ist, befinden sich die radialen Trennwände 23 an der Außenseite des Innenrohres 15. Sie können als separate Teile fest am Innenrohr 15 angebracht sein oder statt dessen auch mit dem Innenrohr 15 einstückig sein.

Der Vorteil der Gestaltung gemäß Fig. 3 bis 6 ist auch derjenige, dass das jeweilige Innenrohr 15 dadurch, dass dieses entweder mit den Querschnittsecken (Fig. 3 und 4) oder mit den Enden der radialen Trennwände 23 an der Innenseite des Filtermaterials 11 anliegt, als Stütze für das innenseitige Aussteifen des Filtermaterials 11 wirksam ist, sofern das Filtermaterial 11 von der Beschaffenheit her einer solchen inneren Abstützung bedarf.

Das fünfte Ausführungsbeispiel in Fig. 7 und 8 unterscheidet sich vom vierten Ausführungsbeispiel gemäß Fig. 5 und 6 dadurch, dass das Filtermaterial 11 ein gefaltetes, insbesondere plissiertes, Material, insbesondere Vlies 18, als Filtermedium aufweist. Dieses Filtermaterial 11 weist mindestens einen durchlässigen Stützkörper 24, 25 auf. Dieser mindestens eine Stützkörper 24, 25 ist aus einem mit Durchlässen versehenen Rohr gebildet, wobei innenseitig des Filtermaterials 11 als innerer Stützkörper 24 ein solches perforiertes Rohr und außenseitig des Filtermaterials 11 ein äußerer Stützkörper 25 ebenfalls in Form eines solchen perforierten Rohres vorgesehen ist. Beide Stützkörper 24 und 25 geben dem Filtermaterial 11 in Form des gefalteten Vlieses 18 den erforderlichen Halt. Ansonsten entspricht das Filterelement 10 gemäß Fig. 7 und 8 demjenigen in Fig. 5 und 6 oder auch demjenigen in Fig. 1, wobei abweichend von letzterem das Innenrohr 15 jedoch mit den radialen Trennwänden 23 ausgestattet ist. Das Ausführungsbeispiel gemäß Fig. 5 und 6 oder gemäß Fig. 7 und 8 hat den besonderen Vorteil, dass in dieser Weise auch ein vorhandenes Filterelement, ohne Innenrohr 15, durch nachträgliches Einsetzen des so gestalteten Innenrohres 15 in einfacher Weise nachgerüstet werden kann.

Bei einem nicht weiter gezeigten Ausführungsbeispiel können die Trennwände, z. B.solche, die analog den Wandungen 19 in Fig. 3 und 4 längs einer Sekante verlaufen, auch durch die Wände eines zusätzlichen Rohres gebildet sein, z. B. durch ein Rohr mit Vieleckquerschnitt, z. B. mit Dreieckquerschnitt oder Viereckquerschnitt, wobei dieses zusätzliche Rohr auf das Innenrohr 15 aufgesetzt ist und dieses umfasst.

Soweit z. B. bei Nachrüstüberlegungen zur Bildung des Innenrohres 15 nur solche verfügbar sein sollten, die über ihre gesamte Rohrlänge mit Durchbrüchen 20 in der Wandung 19 versehen sind, könnten die auf dem oberen ersten etwa halben Längenabschnitt dieses Rohres befindlichen Durchbrüche z. B. durch Einschieben eines zusätzlichen Rohres verdeckt und damit verschlossen werden, wobei dieses zusätzliche, innen eingeschobene Rohr in der Wandung keine Durchbrüche hat und sich hinsichtlich der Länge z. B. nur über den oberen, z. B. etwa halben Längenbereich eines solchen durchgehend mit Durchbrüchen 20 versehenen Innenrohres 15 erstreckt. Statt dessen kann natürlich auch ein ebenso langes zusätzliches Rohr in das Innenrohr 15 eingesetzt werden, wobei dieses zusätzliche Rohr dann etwa auf dem oberen halben Längenbereich keine Durchbrüche in der Wandung enthält, während auf dem unteren etwa halben Längenbereich in der Wandung Durchbrüche vorgesehen sind, die dann mit den Durchbrüchen 20 in der Wandung 19 des Innenrohres 15 kommunizieren.

## Patentansprüche

1. Rohrförmiges Filterelement, das über seine Rohrlänge reichendes Filtermaterial (11) und im Inneren dieses einen Hohlraum (13) aufweist und im Filterbetrieb außen mit zu filterndem Medium beaufschlagbar ist, welches das Filtermaterial (11) von außen nach innen zum Hohlraum (13) hin durchsetzt, wobei im Hohlraum (13) eine Rückspülhilfe (14) angeordnet ist, die im Hohlraum (13) des Filtermaterials (11) ein koaxiales Innenrohr (15) aufweist, das zumindest an einigen Stellen mit Abstand vom Filtermaterial (11) unter Bildung mindestens eines Zwischenraumes (16) dazwischen angeordnet ist,
**dadurch gekennzeichnet,**
**dass** das Innenrohr (15) zumindest etwa auf seinem unteren Längenbereich in der Rohrwandung (19) Durchbrüche (20), z. B. Öffnungen, Bohrungen od. dgl., enthält und dass zum Rückspülen des Filtermaterials (11) ein Rückspülmedium, insbesondere Wasser und/oder Luft, gegensinnig zum Filterbetrieb einerseits in das Innere (21) des Innenrohres (15) und durch dessen Durchbrüche (20) hindurch und andererseits auch in den mindestens einen Zwischenraum (16) und von dort von innen nach außen durch das Filtermaterial (11) leitbar ist.

2. Rohrförmiges Filterelement nach Anspruch 1,
**dadurch gekennzeichnet,**
**dass** das Volumen des mindestens einen Zwischenraumes (16) kleiner bemessen ist als dasjenige des Inneren (21) des Innenrohres (15).

3. Rohrförmiges Filterelement nach Anspruch 1 oder 2,
**dadurch gekennzeichnet,**
**dass** der untere mit Durchbrüchen (20) versehene Längenbereich des Innenrohres (15) etwa halb so lang wie die Gesamtlänge des Innenrohres (15) bemessen ist.

4. Rohrförmiges Filterelement nach einem der Ansprüche 1 bis 3,
**dadurch gekennzeichnet,**
**dass** das Innenrohr (15) hinsichtlich der Querschnittsform und/oder der Querschnittsabmessungen derart gestaltet ist, dass innerhalb des Innenrohres (15) dessen Inneres (21) und außenseitig des Innenrohres (15) zwischen diesem und dem Filtermaterial (11) mehrere Zwischenräume (16) gebildet sind.

5. Rohrförmiges Filterelement nach Anspruch 4,
**dadurch gekennzeichnet,**
**dass** das Innenrohr (15) einen Vieleckquerschnitt oder Sternquerschnitt, z. B. Dreieckquerschnitt, Viereckquerschnitt od. dgl., aufweist und hinsichtlich der Querschnittsabmessungen so bemessen ist, dass das Innenrohr (15) mit seinen Querschnittsecken etwa an der Innenseite des Filtermaterials (11) anliegt, wobei von den Innenrohrwandungen (19) und der Innenseite des Filtermaterials (11) Zwischenräume (16) begrenzt sind.

6. Rohrförmiges Filterelement nach einem der Ansprüche 1 bis 4,
**dadurch gekennzeichnet,**
**dass** das Innenrohr (15) einen kreisförmigen Querschnitt aufweist und von der Innenrohrwandung (19) und der Innenseite des Filtermaterials (11) ein ringförmiger Zwischenraum (16) gebildet ist.

7. Rohrförmiges Filterelement nach einem der Ansprüche 1 bis 6,
**dadurch gekennzeichnet,**
**dass** der rohrförmige Zwischenraum (16) mittels Trennwänden (23, 19) in einzelne Kammern (16) unterteilt ist.

8. Rohrförmiges Filterelement nach Anspruch 7,
**dadurch gekennzeichnet,**
**dass** die Trennwände (23, 19) radial oder längs jeweiliger Sekanten verlaufen.

9. Rohrförmiges Filterelement nach Anspruch 7 oder 8,
**dadurch gekennzeichnet,**
**dass** die Trennwände (23) an der Außenseite des Innenrohres (15) angeordnet sind.

10. Rohrförmiges Filterelement nach einem der Ansprüche 7 bis 9,
**dadurch gekennzeichnet,**
**dass** die Trennwände durch die Wände eines Rohres, insbesondere mit Vieleckquerschnitt, z. B. Dreieckquerschnitt, Viereckquerschnitt od. dgl., gebildet sind, welches das Innenrohr (15) umfasst.

11. Rohrförmiges Filterelement nach einem der Ansprüche 7 bis 9,
**dadurch gekennzeichnet,**
**dass** die Trennwände (23) fest am Innenrohr (15) angebracht oder damit einstückig sind.

12. Rohrförmiges Filterelement nach einem der Ansprüche 4 bis 11,
**dadurch gekennzeichnet,**
**dass** die Zwischenräume (16) in etwa gleichen Umfangswinkelabständen aufeinanderfolgen.

13. Rohrförmiges Filterelement nach einem der Ansprüche 4 bis 12,
**dadurch gekennzeichnet,**
**dass** die Zwischenräume (16) jeweils etwa gleich große Volumina aufweisen.

14. Rohrförmiges Filterelement nach einem der Ansprüche 1 bis 13,
**dadurch gekennzeichnet,**
**dass** das Filtermaterial (11) die Form eines rohrförmigen Zylinderkörpers aufweist.

15. Rohrförmiges Filterelement nach einem der Ansprüche 1 bis 14,
**dadurch gekennzeichnet,**
**dass** das Filtermaterial (11) gewickeltes Garn od.dgl gewickelte Elemente als Filtermedium aufweist.

16. Rohrförmiges Filterelement nach einem der Ansprüche 1 bis 15,
**dadurch gekennzeichnet,**
**dass** das Filtermaterial (11) gefaltetes, insbesondere plissiertes, Material, insbesondere Vlies (18), als Filtermedium aufweist.

17. Rohrförmiges Filterelement nach einem der Ansprüche 1 bis 16,
**dadurch gekennzeichnet,**
**dass** das Filtermaterial (11) mindestens einen durchlässigen Stützkörper (24, 25) aufweist.

18. Rohrförmiges Filterelement nach Anspruch 17,
**dadurch gekennzeichnet,**
**dass** der mindestens eine Stützkörper (24, 25) aus einem mit Durchlässen versehenen Rohr gebildet ist.

19. Rohrförmiges Filterelement nach Anspruch 17 oder 18,
**dadurch gekennzeichnet,**
**dass** der Stützkörper (24, 25), insbesondere das mit Durchlässen versehene Rohr, innenseitig und/oder außenseitig des Filtermaterials (11), insbesondere aus gefaltetem Vlies (18), vorgesehen ist.
